# EUROPEAN PATENT SPECIFICATION

(11) **EP 1 553 012 B1**
(45) Date of publication and mention of the grant of the patent: **02.01.2008**
(21) Application number: 04425004.1
(22) Date of filing: 07.01.2004
(51) Int. Cl.: B62J 11/00, B62J 39/00, B62M 25/08, H01M 2/10

(54) **Combined accessory holder and electronic control system for a bicycle**
Kombinierter Zubehörhalter und elektronische Steuerung für ein Fahrrad
Porte-accessoire et système électronique de commande en combinaison pour bicyclette

(43) Date of publication of application: 13.07.2005
(73) Proprietor: CAMPAGNOLO S.R.L., 36100 Vicenza (VI) (IT)
(72) Inventor: Dal Pra', Giuseppe, 36010 Zanè (VI) (IT); Berno, Andrea, 36040 Torri di Quartesolo (VI) (IT)
(74) Representative: Riccardi, Elisa

(56) References cited:
- EP-A- 0 892 447
- EP-A- 1 276 192
- EP-A- 1 318 650
- DE-A- 10 109 341
- DE-A- 10 147 283
- US-A- 4 830 239
- US-A- 5 597 225
- US-A1- 2001 042 767
- US-A1- 2002 094 474
- US-B1- 6 568 956

## Description

The present invention concerns a combined accessory holder and electronic control system for a bicycle, and in particular a fastening device between the containment units inside which the electronic devices and the power supply devices making up such a system are housed.

Such a control system is associated, for example, with a powered gearshift device, which allows the assisted gearshifting of the chain between crowns and sprockets of different diameters.

Such types of system usually provide a containment unit for an electronic control device, such as integrated electronic boards, with which a containment unit for a power supply device, such as for example a battery, is associated.

A known device of this type is described in the American patent application published under number US-2001-0042767, on which the preamble of claim 1 is based, to the same Applicant. The solution described in such an application provides for an electronic control system fastened to the bicycle in the same anchoring zone as the bottle-cage group comprising a container for an electronic board and an auxiliary container for housing a power supply battery for the electronic board. The auxiliary container for the battery is electrically connected to the electronic control board through an electric cable provided with a connector. The mechanical connection between the auxiliary container and the containment unit for the electronic board is accomplished through two pairs of open elastic branches which are formed in two respective separate plates, one associated with the containment unit for the electronic board and one fastened to the bicycle frame, spaced from the first, through screws.

A drawback of such a solution consists in that the fastening through open elastic branches of the auxiliary container to the container for the electronic board is not secure. Especially in particular racing conditions when the bicycle is subject to stresses and vibrations, or else following accidental collisions, the fastening can be insufficient and lead to the releasing of the auxiliary containment unit from the containment unit for the electronic board, with the likelihood of breakage or loss of the auxiliary container in a race and the consequent blocking of the functions carried out by the electronic system.

Another drawback of such a solution lies in the complexity of construction and assembly of the device, with two separate plates being provided for the connection of the two pairs of open elastic branches to the frame at as many separate locations.

In another embodiment, the bottle-cage comprises a single elongated plate for fixing to the frame and a continuous containment wall for the bottle rigidly connected to the elongated plate. The continuous containment wall integrates a main container cantilevered from the elongated plate and housing the electronic board, and an auxiliary container housing batteries made beneath the main container. The whole system is therefore single piece and the batteries must be loosely removed from the auxiliary container, which appears to be cumbersome.

The object of the present invention is to overcome said drawbacks, creating an electronic system for a bicycle which is secure, reliable, easy to be assembled and of practical use.

Such objects are accomplished through a combined accessory holder and electronic control system as claimed in claim 1.

Advantageously, the two units making up the system of the invention are mechanically connected to each other in a secure manner when they are assembled and can easily be disconnected through the actuation of the button to release the second containment unit from the first containment unit and to allow, for example, the replacement or recharging of the power supply device.

According to a preferred embodiment, a retaining part of the accessory part is associated with the anchoring part.

Still according to the preferred embodiment, the first containment unit is shaped with substantially longitudinal layout and is fastened to the bicycle frame whereas the box-like shaped second containment unit extends perpendicularly cantilevered with respect to the first containment unit.

Further characteristics and advantages of the invention shall appear from the following description with reference to the attached drawings, provided purely as a non-limiting example, wherein:
- fig. 1 represents, in an isometric view, the electronic system of the invention associated with a bottle-cage;
- fig. 2 represents an exploded isometric view of the system of fig. 1;
- fig. 3 represents a side view of the system of fig. 1 with a bottle inserted in the bottle-cage;
- fig. 4 represents a partial section along axis I°-I° of fig. 1 in a first operating position;
- fig. 5 represents a partial section along axis I°-I° of fig. 1 in a second operating position;
- fig. 6 represents, in a partial exploded isometric view, a variant embodiment of the invention.

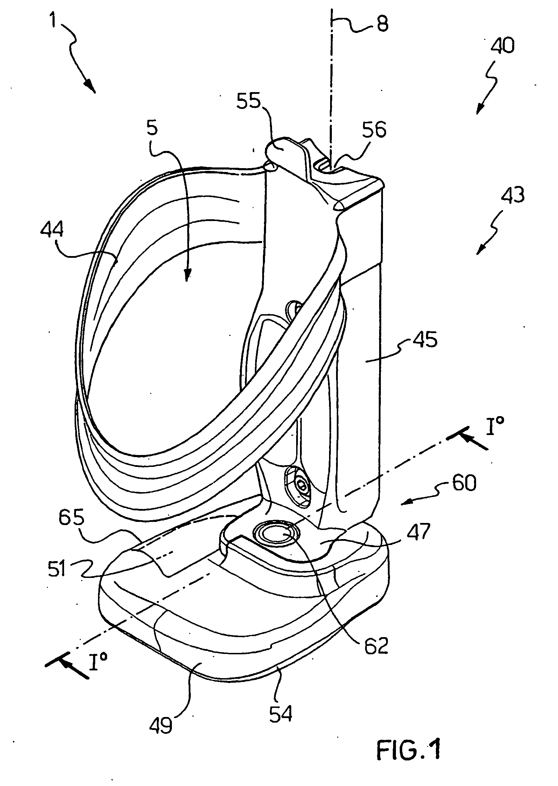

The electronic control system of the invention is represented in figures 1 to 3 where it is globally indicated with 40.

The system of the invention 40 constitutes the anchoring part 43 of a bottle-cage, globally indicated with 1.

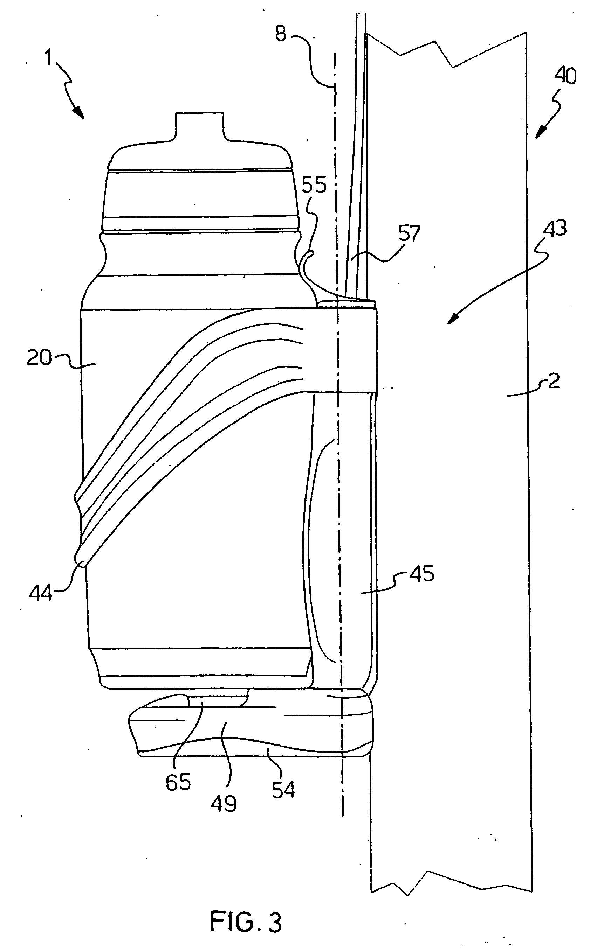

In fig. 3, the bottle-cage 1 is represented mounted to the frame 2 of a bicycle and essentially consists of an anchoring part 43 for fastening to the frame 2 of the bicycle and a retaining part 44 associated with the anchoring part 43. The retaining part 44 defines a seat 5 with a substantially circular section, matching the body of a bottle 20. Such a section can be chosen according to different configurations should it be foreseen that the accessory to be inserted has a different shape.

The anchoring part 43 and the retaining part 44 are connected to each other through a gluing substance. In different embodiments, instead of the gluing substance equivalent known connection means can be used, like for example rivets or screw coupling means.

The retaining part 44 is preferably made of a structural composite material and in particular of long structural carbon fibres incorporated in a matrix of thermo-setting plastic material, such a composite material being commonly referred to as "carbon fibre". The anchoring part 43 is made of a plastic material and in particular of a thermoplastic material reinforced with glass grains. The use of such materials allows particular characteristics of structural strength to be granted to the retaining part 44 and to the anchoring part 43 and at the same time allows the weight of the support element 1 to be kept very low. It should be understood, however, that in other embodiments different combinations of materials can be provided for parts 43 and 44. For example both parts 43, 44 can be made of structural composite material, or both of reinforced or non-reinforced plastic material or also the retaining part 44 can be made of plastic material and the anchoring part 43 of composite material.

Furthermore, the long structural fibres of composite material can alternatively be chosen from glass fibres, aramidic fibres, ceramic fibres, boron fibres or any combination thereof. At the same time, the non-structural elements of the reinforced plastic material can be chosen from short carbon fibres, short glass fibres, minerals or any combination thereof.

The aforementioned materials used to make the parts making up the support element of the invention advantageously have specific weights lower than 2.5 Kg/dm³.

The anchoring part 43 is comprised of a first containment unit 45 inside which an electronic device or a power supply device therefor are arranged, not represented for the sake of simplicity in the figures. Such devices are advantageously mounted on board to the bicycle to carry out particular functions, such as for example the management of a control system for an electronic gearshift or the management of an acquisition and display device of the functions of the bicycle, commonly known as bicycle computer.

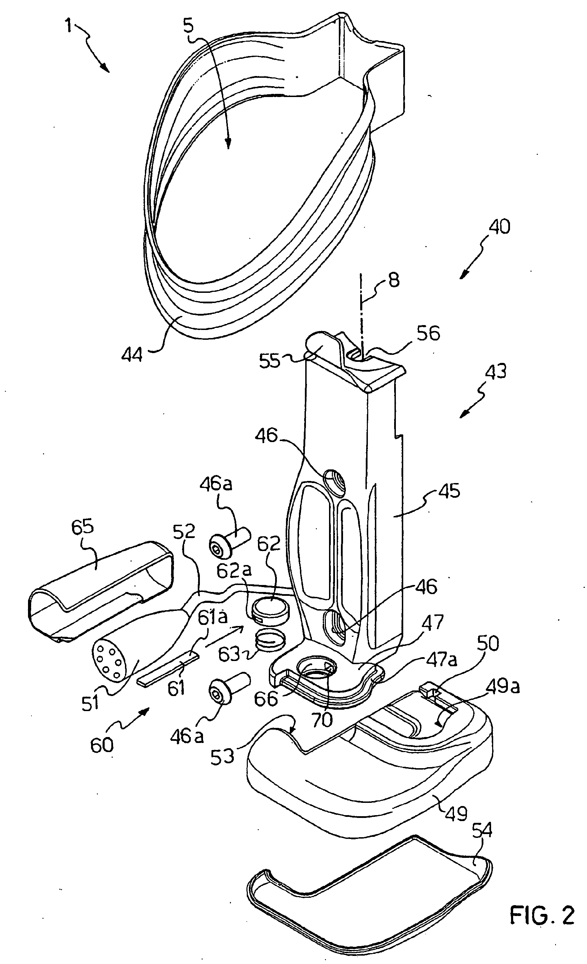

As can be seen more clearly in figures 2 and 3, the first containment unit 45 extends along the main direction 8 of insertion of the bottle 20 and comprises a lower portion 47 which extends perpendicularly with respect to the direction 8 for the support of the bottom of the bottle 20 when it is inserted in the bottle-cage 1.

A box-shaped second containment unit 49, which also extends perpendicularly with respect to the direction 8, for a power supply device for the electronic device, typically a rechargeable battery, is mechanically connected to the lower portion 47. The second containment unit 49 is closed at the bottom by a cover 54.

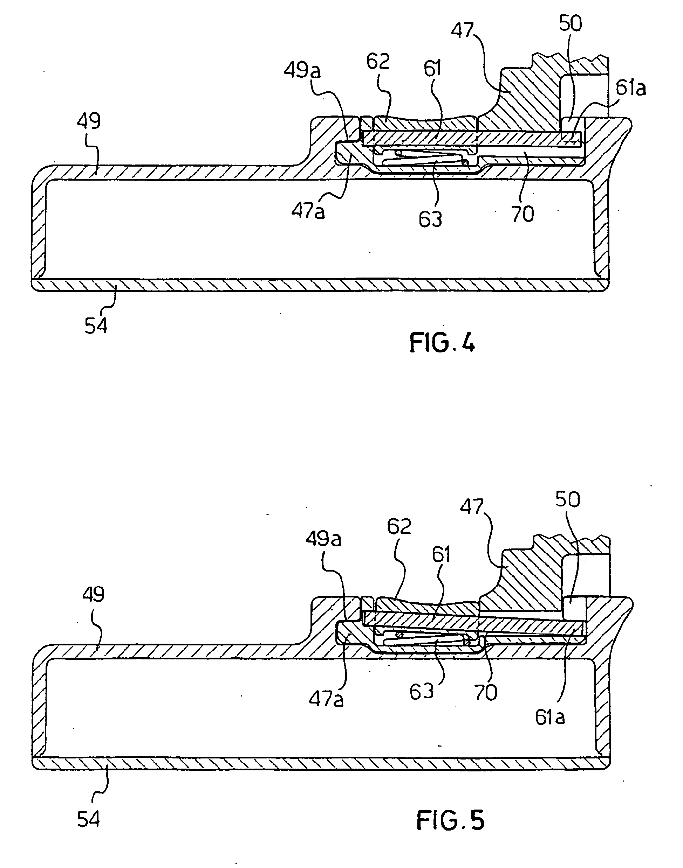

The second containment unit 49 and the lower portion 47 are mechanically removably connected to each other through an undercut edge 49a formed on top of the second containment unit 49, which receives for coupling a shaped edge 47a formed peripherally in the lower portion 47 and having a shape matching the undercut edge 49a. To allow a more secure connection between the second containment unit 49 and the lower portion 47, snap fastening means are provided, globally indicated with 60. Such snap fastening means 60 comprises a pin 61 and a button 62 arranged in a cylindrical seat 66, formed in the lower portion 47, which receives the aforementioned pin 61 in a first through hole 62a. The pin 61 passes through a second through hole 70 formed in the lower portion 47, as can be seen more clearly in figures 4 and 5, and engages with its end 61a in a recessed zone 50 formed in the second containment unit 49. A helical spring 63 is arranged below the button 62 inside the cylindrical seat 66. Such a spring 63 applies a normal force upwards onto the button 62 and the pin 61 inserted in the through hole 70. In different embodiments, instead of the spring 63 any equivalent elastic element of a known type can be used.

When the second containment unit 49 is connected to the lower portion 47, like in the configuration shown in fig. 4, the end 61a of the pin 61 is kept in abutment inside the recessed zone 50 thanks to the aforementioned upward biasing force of the spring 63 against the button 62 which, in turn, biases the pin 61 upwards. To accomplish the detachment of the second containment unit 49, as can be seen in fig. 5, the button 62 is biased downwards compressing the spring 63, the pin 61 is in turn biased downwards moving inside the second hole 70. In such a way, the end 61a of the pin 61 comes out from the bottom of the recessed zone 50 allowing the removal of the second containment unit 49 through its sideways translation with respect to the lower portion 47 (with reference to figure 3, moving the second containment unit 49 in a direction towards the observer).

It is clear that in variant embodiments, the snap fastening means could be made in a different and equivalent way, for example providing a button associated with the second containment unit 49 which elastically moves a counter acting element that engages in a corresponding recessed zone 50 present in said lower portion 47 or directly in the first containment unit 45.

In this case it is not strictly necessary for the lower portion 47 to extend with respect to the main axis 8. The mechanical connection with the second containment unit 49 could also be obtained, indeed, by forming an undercut edge in the lower portion of the first containment unit 45, which receives for coupling a shaped edge formed in the second containment unit and having a shape matching the undercut edge of the lower portion. It is clear that in such a variant, the support function of the bottle is carried out by the second containment unit 49.

Moreover, the lower portion 47 can extend inwards with respect to the main axis but be smaller in size. In such a case, it can be foreseen that the support function of the bottle be advantageously carried out, as in the previous case, by the second containment unit 49.

The electrical connection between the power supply device arranged inside the second containment unit 49 and the electronic device arranged inside the first containment unit 45, is accomplished through a polar connector 51 which is electrically connected through the cable 52 to the electronic device. The connector 51 is also removably associated with the second containment unit 49 through engagement into a suitable connection socket 53. A removable covering element 65 further allows the protection of the electrical connections from external agents, in particular water.

In the first containment unit 45, and in an upper position, there is an elastically deformable holding tongue 55 which extends towards the seat 5 for receiving the bottle 20. The tongue 55 contributes to improving the holding in position of the bottle 20 by resting against its outer surface, as can be seen in fig. 3.

The rear side of the first containment unit 45 facing towards the frame is advantageously hermetically closed through a closing element (not shown in figures 1 to 5) which allows the protection of the electronic device from external agents like rain, mud and dust.

The anchoring part 43 is made integral with the frame 2 through screw fastening means consisting of two screws 46a arranged passing through respective through holes 46 formed in the first containment unit 45.

Such screws 46a, engaging in corresponding threaded holes present in the frame 2, not shown in the figures, allow the fastening at two points of the support element 1 to the bicycle. It is clear that the screw fastening means could, in different solutions, be replaced by different but equivalent means, like for example a clamp.

Finally, in the containment unit 45 there is an upper opening 56 which allows the passage of electrical cables 57 towards the outside, as can be seen in figures 1 to 3, and which are connected inside the electronic device.

The positioning of the bottle 20 in the support element 1 takes place substantially through its insertion in the seat 5. During such insertion, the walls of the bottle 20 come into contact with the inner wall of the annular retaining part 44, whereas the bottom of the bottle 20 slides along the second containment unit 45 until it abuts against the lower portion 47. The bottle 20 is kept in the inserted position thanks to the force of the annular part 44 applied on the bottle 20. The deformable tongue 55 then, as stated, improves the holding in position of the bottle 20, resting against its outer surface.

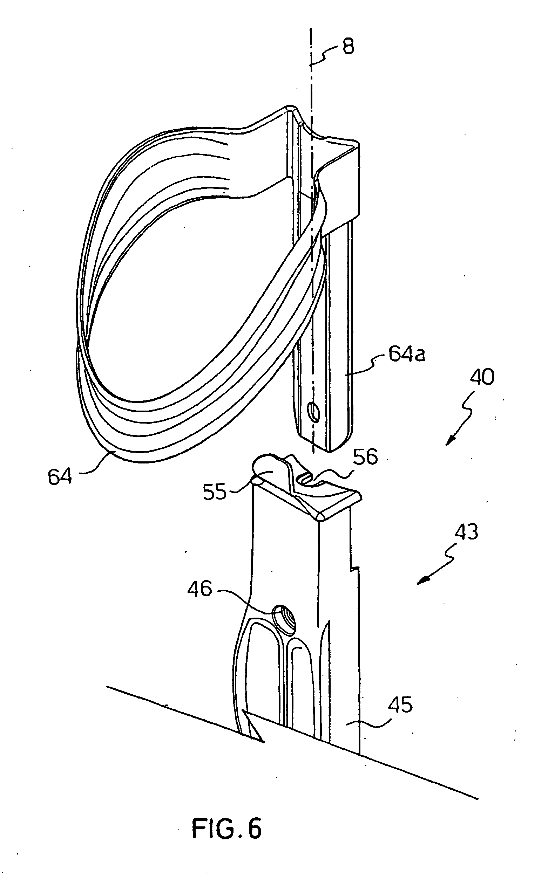

Fig. 6 represents a variant of the system described with reference to figures 1 to 5 and differs therefrom in the configuration of the retaining element 64. Indeed, it has an appendix 64a which protrudes downwards and along the main direction 8 which acts, advantageously, as a hermetic closing element of the first containment unit 45 in its portion facing towards the bicycle frame, with reference to the bottle-cage in mounted configuration.

In another variant, the power supply device could be arranged inside the first containment unit 45 and the electronic device could be arranged inside the second containment unit 49.

## Claims

1. Combined accessory holder (1) and electronic control system (40) for a bicycle comprising a first containment unit (45) for an electronic device or for a power supply device and a second containment unit (49) for a power supply device or for an electronic device, said second containment unit (49) being mechanically removably connected to said first containment unit (45) through snap fastening means (60), said first containment unit (45) being suitable for supporting an accessory, **characterised in that** said snap fastening means (60) are provided with an actuation button (62), and **in that** said second containment unit (49) is also suitable for supporting the accessory when mechanically connected to the first containment unit (45).

2. Combined accessory holder (1) and electronic control system (40) according to claim 1, **characterised in that** said actuation button (62) is associated with said first containment unit (45) and elastically moves a counter acting element (61) which engages in a recessed zone (50) formed in said second containment unit (49).

3. Combined accessory holder (1) and electronic control system (40) according to claim 1, **characterised in that** said actuation button (62) is associated with said second containment unit (49) and elastically moves a counter acting element which engages in a recessed zone formed in said first containment unit (45).

4. Combined accessory holder (1) and electronic control system (40) according to claim 2, **characterised in that** said counter acting element consists of a pin (61) arranged passing through a first hole (62a) formed in said actuation button (62), an end (61a) of said pin (61) being received in said recessed zone (50) when said second containment unit (49) is connected to said first containment unit (45).

5. Combined accessory holder (1) and electronic control system (40) according to claim 2, **characterised in that** said actuation button (62) is received in a seat (66) formed in said first containment unit (45) and elastically cooperates with a spring (63) arranged in said seat (66).

6. Combined accessory holder (1) and electronic control system (40) according to claim 1, **characterised in that** said second containment unit (49) has a socket (53) for the connection of a disconnectable electrical connector (51), in turn connected to an electric cable (52) associated with said first containment unit (45).

7. Combined accessory holder (1) and electronic control system (40) according to claim 1, **characterised in that** said first containment unit (45) constitutes the anchoring part (43) of a support element (1) for accessories (20) that can be fastened to the bicycle frame (2).

8. Combined accessory holder (1) and electronic control system (40) according to claim 7, **characterised in that** said first containment unit (45) extends in a substantially longitudinal direction along a main direction (8) of insertion of said accessory (20).

9. Combined accessory holder (1) and electronic control system (40) according to claim 8, **characterised in that** said first containment unit (45) comprises a lower portion (47) shaped for the connection of the second containment unit (49).

10. Combined accessory holder (1) and electronic control system (40) according to claim 9, **characterised in that** said lower portion (47) extends perpendicularly cantilevered from said substantially longitudinal direction.

11. Combined accessory holder (1) and electronic control system (40) according to claim 10, **characterised in that** said lower portion (47) constitutes the support for the bottom of said accessory (20), when inserted in said support element (1).

12. Combined accessory holder (1) and electronic control system (40) according to claim 9, **characterised in that** said second containment unit (49) extends perpendicularly cantilevered from said first containment unlit (45).

13. Combined accessory holder (1) and electronic control system (40) according to claim 12, **characterised in that** said second containment unit (49) constitutes the support for the bottom of said accessory (20), when inserted in said element (1).

14. Combined accessory holder (1) and electronic control system (40) according to claim 9, **characterised in that** said second containment unit (49) comprises an undercut edge (49a) which receives for coupling a shaped edge (47a) formed in said lower portion (47) and having a shape matching said undercut edge (49a).

15. Combined accessory holder (1) and electronic control system (40) according to claim 9, **characterised in that** said lower portion (47) comprises an undercut edge which receives for coupling a shaped edge formed in said second containment unit (49) and having a shape matching said undercut edge.

16. Combined accessory holder (1) and electronic control system (40) according to claim 7, **characterised in that** said first containment unit (45) has at the top an elastically deformable holding tongue (55) cooperating with said accessory (20), when inserted in said support element (1).

17. Combined accessory holder (1) and electronic control system (40) according to claim 7, **characterised in that** it comprises at least one retaining part (44, 64) defining a seat (5) suitable for receiving said accessory (20).

18. Combined accessory holder (1) and electronic control system (40) according to claim 17, **characterised in that** said retaining part (64) comprises an appendix (64a) extending substantially in the main direction (8) suitable for defining a closing element for said first containment unit (45).

19. Combined accessory holder (1) and electronic control system (40) according to claim 17, **characterised in that** said anchoring part (43) and said retaining part (44; 64), are distinct from each other and connected through joining means (6) and **in that** they are both made of a polymeric material.

20. Combined accessory holder (1) and electronic control system (40) according to claim 17, **characterised in that** at least one of said parts (43, 44; 64) comprises structural fibres incorporated in a matrix of said polymeric material to form a structural composite material.

21. Combined accessory holder (1) and electronic control system (40) according to claim 17, **characterised in that** at least one of said parts (43, 44; 64) comprises non-structural reinforcement elements incorporated in said polymeric material to form a reinforced plastic material.

22. Combined accessory holder (1) and electronic control system (40) according to claim 20, **characterised in that** said structural fibres can be chosen from the group comprising carbon fibres, glass fibres, aramidic fibres, ceramic fibres, boron fibres or any combination thereof.

23. Combined accessory holder (1) and electronic control system (40) according to claim 21, **characterised in that** said non-structural reinforcement elements can be chosen from carbon fibres, glass fibres, glass beads, minerals or any combination thereof.

24. Combined accessory holder (1) and electronic control system (40) according to claim 17, **characterised in that** at least one of said parts (43, 44; 64) consists of a thermo-setting plastic material.

25. Combined accessory holder (1) and electronic control system (40) according to claim 17, **characterised in that** at least one of said parts (43, 44; 64) consists of a thermoplastic material.

26. Combined accessory holder (1) and electronic control system (40) according to claims 20 and 21, **characterised in that** said retaining part (44; 64) is made of said structural composite material and said anchoring part (43) is made of said reinforced plastic material.

27. Combined accessory holder (1) and electronic control system (40) according to claim 17, **characterised in that** said retaining part (44; 64) is substantially ring-shaped to transversally embrace said accessory (20).

28. Combined accessory holder (1) and electronic control system (40) according to claim 7, **characterised in that** it comprises screw fastening means for its fastening to the frame (2) of the bicycle.

29. Combined accessory holder (1) and electronic control system (40) according to claim 28, **characterised in that** said screw fastening means consists of screws (46a) arranged in through holes (46) formed in said first containment unit (45) which engage in respective threaded holes formed in said frame (2).

30. Combined accessory holder (1) and electronic control system (40) according to claim 7, **characterised in that** it comprises clamp means for fastening said first containment unit (45) to said frame (2).

31. Combined accessory holder (1) and electronic control system (40) according to claim 7, **characterised in that** said support element (1) is a bottle-cage.

## Patentansprüche

1. Zubehörhalter (1) und elektronisches Steuersystem (40), die kombiniert sind, für ein Fahrrad, das eine erste Behältereinheit (45) für eine elektronische Vorrichtung oder für eine Stromversorgungsvorrichtung und eine zweite Behältereinheit (49) für eine Stromversorgungsvorrichtung oder für eine elektronische Vorrichtung aufweist, wobei die zweite Behältereinheit (49) mechanisch abnehmbar mit der ersten Behältereinheit (45) über Schnappbefestigungseinrichtungen (60) verbunden ist, wobei die erste Behältereinheit (45) dazu geeignet ist, einen Zubehörteil zu halten, **dadurch gekennzeichnet, dass** die Schnappbefestigungseinrichtungen (60) mit einer Betätigungstaste (62) versehen sind und dass die zweite Behältereinheit (49) auch zum Halten des Zubehörteils dann, wenn sie mechanisch mit der ersten Behältereinheit (45) verbunden ist, geeignet ist.

2. Zubehörhalter (1) und elektronisches Steuersystem (40), die kombiniert sind, nach Anspruch 1, **dadurch gekennzeichnet, dass** die Betätigungstaste (62) der ersten Behältereinheit (45) zugeordnet ist und elastisch ein entgegenwirkendes Element (61) bewegt, das in eine vertiefte Zone (50) eingreift, die in der zweiten Behältereinheit (49) gebildet ist.

3. Zubehörhalter (1) und elektronisches Steuersystem (40), die kombiniert sind, nach Anspruch 1, **dadurch gekennzeichnet, dass** die Betätigungstaste (62) der zweiten Behältereinheit (49) zugeordnet ist und elastisch ein entgegenwirkendes Element bewegt, das in eine vertiefte Zone eingreift, die in der ersten Behältereinheit (45) gebildet ist.

4. Zubehörhalter (1) und elektronisches Steuersystem (40), die kombiniert sind, nach Anspruch 2, **dadurch gekennzeichnet, dass** das entgegenwirkende Element aus einem Stift (61), der so angeordnet ist, dass er durch ein erstes Loch (62a) hindurchführt, das in der Betätigungstaste (62) gebildet ist, besteht, wobei ein Ende (61 a) des Stifts (61) in der vertieften Zone (50) dann aufgenommen wird, wenn die zweite Behältereinheit (49) mit der ersten Behältereinheit (45) verbunden ist.

5. Zubehörhalter (1) und elektronisches Steuersystem (40), die kombiniert sind, nach Anspruch 2, **dadurch gekennzeichnet, dass** die Betätigungstaste (62) in einem Sitz (66) aufgenommen ist, der in der ersten Behältereinheit (45) gebildet ist, und elastisch mit einer Feder (63), die in dem Sitz (66) angeordnet ist, zusammenwirkt.

6. Zubehörhalter (1) und elektronisches Steuersystem (40), die kombiniert sind, nach Anspruch 1, **dadurch gekennzeichnet, dass** die zweite Behältereinheit (49) eine Buchse (53) für die Verbindung mit einem lösbaren, elektrischen Verbinder (51), der wiederum mit einem elektrischen Kabel (62) verbunden ist, das der ersten Behältereinheit (45) zugeordnet ist, besitzt.

7. Zubehörhalter (1) und elektronisches Steuersystem (40), die kombiniert sind, nach Anspruch 1, **dadurch gekennzeichnet, dass** die erste Behältereinheit (45) den Verankerungsteil (43) eines Trageelements (1) für Zubehörteile (20), das an dem Fahrradrahmen (2) befestigt werden kann, bildet.

8. Zubehörhalter (1) und elektronisches Steuersystem (40), die kombiniert sind, nach Anspruch 7, **dadurch gekennzeichnet, dass** sich die erste Behältereinheit (45) in einer im Wesentlichen Längsrichtung entlang einer Hauptrichtung (8) eines Einsetzens des Zubehörteils (20) erstreckt.

9. Zubehörhalter (1) und elektronisches Steuersystem (40), die kombiniert sind, nach Anspruch 8, **dadurch gekennzeichnet, dass** die erste Behältereinheit (45) einen unteren Abschnitt (47), der für die Verbindung der zweiten Behältereinheit (49) geformt ist, aufweist.

10. Zubehörhalter (1) und elektronisches Steuersystem (40), die kombiniert sind, nach Anspruch 9, **dadurch gekennzeichnet, dass** sich der untere Abschnitt (47) senkrecht frei tragend von der im Wesentlichen Längsrichtung aus erstreckt.

11. Zubehörhalter (1) und elektronisches Steuersystem (40), die kombiniert sind, nach Anspruch 10, **dadurch gekennzeichnet, dass** der untere Abschnitt (47) den Halter für den Boden des Zubehörteils (20) bildet, wenn es in das Trageelement (1) eingesetzt ist.

12. Zubehörhalter (1) und elektronisches Steuersystem (40), die kombiniert sind, nach Anspruch 9, **dadurch gekennzeichnet, dass** sich die zweite Behältereinheit (49) senkrecht frei tragend von der ersten Behältereinheit (45) aus erstreckt.

13. Zubehörhalter (1) und elektronisches Steuersystem (40), die kombiniert sind, nach Anspruch 12, **dadurch gekennzeichnet, dass** die zweite Behältereinheit (49) den Halter für den Boden des Zubehörteils (20) bildet, wenn es in das Element (1) eingesetzt ist.

14. Zubehörhalter (1) und elektronisches Steuersystem (40), die kombiniert sind, nach Anspruch 9, **dadurch gekennzeichnet, dass** die zweite Behältereinheit (49) eine hinterschnittene Kante (49a) aufweist, die für eine Verbindung eine geformte Kante (47a) aufnimmt, die in dem unteren Abschnitt (47) gebildet ist und eine Form besitzt, die die hinterschnittene Kante (49a) anpasst.

15. Zubehörhalter (1) und elektronisches Steuersystem (40), die kombiniert sind, nach Anspruch 9, **dadurch gekennzeichnet, dass** der untere Abschnitt (47) eine hinterschnittene Kante aufweist, die für eine Verbindung eine geformte Kante aufnimmt, die in der zweiten Behältereinheit (49) gebildet ist und eine Form besitzt, die die hinterschnittene Kante anpasst.

16. Zubehörhalter (1) und elektronisches Steuersystem (40), die kombiniert sind, nach Anspruch 7, **dadurch gekennzeichnet, dass** die erste Behältereinheit (45) an der Oberseite eine elastisch deformierbare Haltezunge (55) aufweist, die mit dem Zubehörteil (20) zusammenwirkt, wenn es in das Trageelement (1) eingesetzt ist.

17. Zubehörhalter (1) und elektronisches Steuersystem (40), die kombiniert sind, nach Anspruch 7, **dadurch gekennzeichnet, dass** es mindestens einen Rückhalteteil (44, 64) aufweist, der einen Sitz (5) definiert, der zum Aufnehmen des Zubehörteils (20) geeignet ist.

18. Zubehörhalter (1) und elektronisches Steuersystem (40), die kombiniert sind, nach Anspruch 17, **dadurch gekennzeichnet, dass** der Rückhalteteil (64) einen Anhang (64a) aufweist, der sich im Wesentlichen in der Hauptrichtung (8) erstreckt, der dazu geeignet ist, ein Verschlusselement für die erste Behältereinheit (45) zu definieren.

19. Zubehörhalter (1) und elektronisches Steuersystem (40), die kombiniert sind, nach Anspruch 17, **dadurch gekennzeichnet, dass** der Verankerungsteil (43) und der Rückhalteteil (44; 64) verschieden zueinander sind und miteinander über eine Verbindungseinrichtung (6) verbunden sind, und dass sie beide aus einem polymeren Material gebildet sind.

20. Zubehörhalter (1) und elektronisches Steuersystem (40), die kombiniert sind, nach Anspruch 17, **dadurch gekennzeichnet, dass** mindestens eines der Teile (43, 44; 64) Strukturfasern aufweist, die in einer Matrix des Polymermaterials eingebettet sind, um einen Strukturverbund zu bilden.

21. Zubehörhalter (1) und elektronisches Steuersystem (40), die kombiniert sind, nach Anspruch 17, **dadurch gekennzeichnet, dass** mindestens eines der Teile (43, 44; 64) nicht-strukturelle Verstärkungselemente aufweist, die in dem Polymermaterial eingebettet sind, um ein verstärktes Kunststoffmaterial zu bilden.

22. Zubehörhalter (1) und elektronisches Steuersystem (40), die kombiniert sind, nach Anspruch 20, **dadurch gekennzeichnet, dass** die Strukturfasern aus der Gruppe ausgewählt sind, die Kohlenstofffasern, Glasfasern, Aramidfasern, keramischen Fasern, Borfasern, oder irgend einer Kombination davon, aufweisen.

23. Zubehörhalter (1) und elektronisches Steuersystem (40), die kombiniert sind, nach Anspruch 21, **dadurch gekennzeichnet, dass** die nicht-strukturellen Verstärkungselemente aus Kohlenstofffasern, Glasfasern, Glaskugeln, Mineralien, oder irgendeiner Kombination davon, ausgewählt werden können.

24. Zubehörhalter (1) und elektronisches Steuersystem (40), die kombiniert sind, nach Anspruch 17, **dadurch gekennzeichnet, dass** mindestens eines der Teile (43, 44; 64) aus einem thermisch härtenden Kunststoffmaterial besteht.

25. Zubehörhalter (1) und elektronisches Steuersystem (40), die kombiniert sind, nach Anspruch 17, **dadurch gekennzeichnet, dass** mindestens eines der Teile (43, 44; 64) aus einem thermoplastischen Material besteht.

26. Zubehörhalter (1) und elektronisches Steuersystem (40), die kombiniert sind, nach Anspruch 20 und 21, **dadurch gekennzeichnet, dass** der Rückhalteteil (44; 64) aus dem Strukturverbund gebildet ist und der Verankerungsteil (43) aus dem verstärkten Kunststoffmaterial gebildet ist.

27. Zubehörhalter (1) und elektronisches Steuersystem (40), die kombiniert sind, nach Anspruch 17, **dadurch gekennzeichnet, dass** der Rückhalteteil (44; 64) im Wesentlichen ringförmig ist, um quer den Zubehörteil (20) zu umschließen.

28. Zubehörhalter (1) und elektronisches Steuersystem (40), die kombiniert sind, nach Anspruch 7, **dadurch gekennzeichnet, dass** sie Schraubbefestigungseinrichtungen für deren Befestigung an dem Rahmen (2) des Fahrrads aufweisen.

29. Zubehörhalter (1) und elektronisches Steuersystem (40), die kombiniert sind, nach Anspruch 28, **dadurch gekennzeichnet, dass** die Schraubbefestigungseinrichtungen aus Schrauben (46a), die in Durchgangslöchern (46) angeordnet sind, die in der ersten Behältereinheit (45) gebildet sind, die in entsprechende Gewindelöcher eingreifen, die in dem Rahmen (2) gebildet sind, bestehen.

30. Zubehörhalter (1) und elektronisches Steuersystem (40), die kombiniert sind, nach Anspruch 7, **dadurch gekennzeichnet, dass** sie Klemmeinrichtungen zum Befestigen der ersten Behältereinheit (45) an dem Rahmen (2) aufweisen.

31. Zubehörhalter (1) und elektronisches Steuersystem (40), die kombiniert sind, nach Anspruch 7, **dadurch gekennzeichnet, dass** das Trageelement (1) ein Flaschenkäfig ist.

## Revendications

1. Support d'accessoire (1) et système de commande électronique (40) combinés pour une bicyclette comprenant un premier élément de confinement (45) pour un dispositif électronique ou pour un dispositif d'alimentation en énergie et un second élément de confinement (49) pour un dispositif d'alimentation en énergie ou pour un dispositif électronique, ledit second élément de confinement (49) étant raccordé mécaniquement de façon amovible audit premier élément de confinement (45) par des moyens de fixation par pression (60), ledit premier élément de confinement (45) étant adapté pour supporter un accessoire, **caractérisés en ce que** lesdits moyens de fixation par pression (60) sont dotés d'un bouton d'actionnement (62), et **en ce que** ledit second élément de confinement (49) est également adapté pour supporter l'accessoire lorsqu'il est mécaniquement raccordé au premier élément de confinement (45).

2. Support d'accessoire (1) et système de commande électronique (40) combinés selon la revendication 1, **caractérisés en ce que** ledit bouton d'actionnement (62) est associé audit premier élément de confinement (45) et déplace élastiquement un élément de blocage (61) qui se met en prise dans une zone en retrait (50) formée dans ledit second élément de confinement (49).

3. Support d'accessoire (1) et système de commande électronique (40) combinés selon la revendication 1, **caractérisés en ce que** ledit bouton d'actionnement (62) est associé audit second élément de confinement (49) et déplace élastiquement un élément de blocage (61) qui se met en prise dans une zone en retrait (50) formée dans ledit premier élément de confinement (45).

4. Support d'accessoire (1) et système de commande électronique (40) combinés selon la revendication 2, **caractérisés en ce que** ledit élément de blocage comprend une goupille (61) agencée de façon à passer à travers un premier trou (62a) formé dans ledit bouton d'actionnement (62), une extrémité (61a) de ladite goupille (61) étant reçue dans ladite zone en retrait (50) lorsque ledit second élément de confinement (49) est raccordé audit premier élément de confinement (45).

5. Support d'accessoire (1) et système de commande électronique (40) combinés selon la revendication 2, **caractérisés en ce que** ledit bouton d'actionnement (62) est reçu dans une assise (66) formée dans ledit premier élément de confinement (45) et coopère élastiquement avec un ressort (63) agencé dans ladite assise (66).

6. Support d'accessoire (1) et système de commande électronique (40) combinés selon la revendication 1, **caractérisés en ce que** ledit second élément de confinement (49) possède une prise de courant (53) destinée à la connexion d'un connecteur électrique déconnectable (51), à son tour connecté à un câble électrique (52) associé audit premier élément de confinement (45).

7. Support d'accessoire (1) et système de commande électronique (40) combinés selon la revendication 1, **caractérisés en ce que** ledit premier élément de confinement (45) constitue une partie d'ancrage (43) d'un élément de support (1) pour les accessoires (20) qui peuvent être fixés au cadre de bicyclette (2).

8. Support d'accessoire (1) et système de commande électronique (40) combinés selon la revendication 7, **caractérisés en ce que** ledit premier élément de confinement (45) s'étend dans une direction sensiblement longitudinale le long d'une direction principale (8) d'insertion dudit accessoire (20).

9. Support d'accessoire (1) et système de commande électronique (40) combinés selon la revendication 8, **caractérisés en ce que** ledit premier élément de confinement (45) comprend une partie inférieure (47) façonnée pour le raccordement du second élément de confinement (49).

10. Support d'accessoire (1) et système de commande électronique (40) combinés selon la revendication 9, **caractérisés en ce que** ladite partie inférieure (47) s'étend perpendiculairement en porte-à-faux par rapport à ladite direction sensiblement longitudinale.

11. Support d'accessoire (1) et système de commande électronique (40) combinés selon la revendication 10, **caractérisés en ce que** ladite partie inférieure (47) sert de support à la partie inférieure dudit accessoire (20), lorsqu'il est inséré dans ledit élément de support (1).

12. Support d'accessoire (1) et système de commande électronique (40) combinés selon la revendication 9, **caractérisés en ce que** ledit second élément de confinement (49) s'étend perpendiculairement en porte-à-faux par rapport audit premier élément de confinement (45).

13. Support d'accessoire (1) et système de commande électronique (40) combinés selon la revendication 12, **caractérisés en ce que** ledit second élément de confinement (49) sert de support à la partie inférieure dudit accessoire (20), lorsqu'il est inséré dans ledit élément (1).

14. Support d'accessoire (1) et système de commande électronique (40) combinés selon la revendication 9, **caractérisés en ce que** ledit second élément de confinement (49) comprend un bord de découpe (49a) qui reçoit pour couplage un bord façonné (47a) formé dans ladite partie inférieure (47) et ayant une forme s'adaptant audit bord de découpe (49a).

15. Support d'accessoire (1) et système de commande électronique (40) combinés selon la revendication 9, **caractérisés en ce que** ladite partie inférieure (47) comprend un bord de découpe qui reçoit pour couplage un bord profilé façonné dans ledit second élément de confinement (49) et ayant une forme s'adaptant audit bord de découpe.

16. Support d'accessoire (1) et système de commande électronique (40) combinés selon la revendication 7, **caractérisés en ce que** ledit premier élément de confinement (45) a sur sa partie supérieure une languette de maintien déformable élastiquement (55) coopérant avec ledit accessoire (20), lorsqu'il est inséré dans ledit élément de support (1).

17. Support d'accessoire (1) et système de commande électronique (40) combinés selon la revendication 7, **caractérisés en ce qu'**il comprend au moins une partie de confinement (44, 64) définissant une assise (5) adaptée pour recevoir ledit accessoire (20).

18. Support d'accessoire (1) et système de commande électronique (40) combinés selon la revendication 17, **caractérisés en ce que** ladite partie de confinement (64) comprend un appendice (64a) s'étendant sensiblement dans la direction principale (8) adapté pour définir un élément de fermeture pour ledit premier élément de confinement (45).

19. Support d'accessoire (1) et système de commande électronique (40) combinés selon la revendication 17, **caractérisés en ce que** ladite partie d'ancrage (43) et ladite partie de confinement (44 ; 64) sont distinctes l'une de l'autre et raccordées par des moyens de liaison (6) et **en ce qu'**ils sont toutes deux composées d'un matériau polymère.

20. Support d'accessoire (1) et système de commande électronique (40) combinés selon la revendication 17, **caractérisés en ce qu'**au moins une desdites parties (43, 44 ; 64) comprend des fibres structurelles incorporées dans une matrice dudit matériau polymère afin de former un matériau composite structurel.

21. Support d'accessoire (1) et système de commande électronique (40) combinés selon la revendication 17, **caractérisés en ce qu'**au moins une desdites parties (43, 44 ; 64) comprend des éléments de renforcement non structurels incorporés audit matériau polymère afin de former un matériau de plastique renforcé.

22. Support d'accessoire (1) et système de commande électronique (40) combinés selon la revendication 20, **caractérisés en ce que** lesdites fibres structurelles peuvent être choisies dans le groupe comprenant des fibres de carbone, des fibres de verre, des fibres aramides, des fibres céramiques, des fibres de bore ou une combinaison quelconque de celles-ci.

23. Support d'accessoire (1) et système de commande électronique (40) combinés selon la revendication 21, **caractérisés en ce que** lesdits éléments de renforcement non structurels peuvent être choisis parmi des fibres de carbone, des fibres de verre, des billes de verre, des minéraux ou une quelconque combinaison de ceux-ci.

24. Support d'accessoire (1) et système de commande électronique (40) combinés selon la revendication 17, **caractérisés en ce qu'**au moins l'une desdites parties (43, 44 ; 64) est constituée d'un matériau plastique thermodurcissable.

25. Support d'accessoire (1) et système de commande électronique (40) combinés selon la revendication 17, **caractérisés en ce qu'**au moins l'une desdites parties (43, 44 ; 64) est constituée d'un matériau thermoplastique.

26. Support d'accessoire (1) et système de commande électronique (40) combinés selon les revendications 20 et 21, **caractérisés en ce que** ladite partie de confinement (44 ; 64) est composée dudit matériau composite structurel et **en ce que** ladite partie d'ancrage (43) est fabriquée à partir dudit matériau plastique renforcé.

27. Support d'accessoire (1) et système de commande électronique (40) combinés selon la revendication 17, **caractérisés en ce que** ladite partie de confinement (44 ; 64) est de forme sensiblement annulaire pour encercler transversalement ledit accessoire (20).

28. Support d'accessoire (1) et système de commande électronique (40) combinés selon la revendication 7, **caractérisés en ce qu'**ils comprennent des moyens de fixation à vis pour assurer leur fixation au cadre (2) de la bicyclette.

29. Support d'accessoire (1) et système de commande électronique (40) combinés selon la revendication 28, **caractérisés en ce que** lesdits moyens de fixation à vis sont constitués de vis (46a) agencées dans les trous traversants (46) formés dans ledit premier élément de confinement (45) qui se mettent en prise dans les trous filetés respectifs formés dans ledit cadre (2).

30. Support d'accessoire (1) et système de commande électronique (40) combinés selon la revendication 7, **caractérisés en ce qu'**ils comprennent des moyens de serrage destinés à fixer ledit premier élément de confinement (45) audit cadre (2).

31. Support d'accessoire (1) et système de commande électronique (40) combinés selon la revendication 7, **caractérisés en ce que** ledit élément de support (1) est un porte-gourde.
